## Europäisches Patentamt

## European Patent Office

## Office européen des brevets

(11) Publication number: **0 163 621**
**B1**

(12) **EUROPEAN PATENT SPECIFICATION**

(45) Date of publication of patent specification: **23.03.88**

(51) Int. Cl.⁴: **B 60 S 9/04, B 60 P 1/64**

(21) Application number: **85850159.6**

(22) Date of filing: **06.05.85**

(54) **An arrangement of foldable and adjustable support legs in load-carrying frames.**

(30) Priority: **09.05.84 SE 8402490**

(43) Date of publication of application:
**04.12.85 Bulletin 85/49**

(45) Publication of the grant of the patent:
**23.03.88 Bulletin 88/12**

(84) Designated Contracting States:
**AT BE CH DE FR GB IT LI LU NL SE**

(56) References cited:
**FR-A-2 123 407**
**GB-A- 276 843**
**GB-A- 967 867**
**GB-A-2 066 167**
**US-A-3 152 709**
**US-A-4 176 825**

(73) Proprietor: **KALMAR LAGAB AB**
**Box 209 Industrivägen**
**S-312 01 Laholm (SE)**

(72) Inventor: **Henriksson, Arne**
**Elins Väg 1**
**S-312 05 Skottorp (SE)**
Inventor: **Jönsson, Rune Ingemar**
**Aleden 38**
**S-312 00 Laholm (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The subject invention concerns an arrangement of foldable and adjustable support legs in load-carrying frames for multipurpose loading platforms and similar load-receiving surfaces. The support leg comprise at least two parts which are arranged to be telescopically displaceable for lengthening and shortening.

Multipurpose loading platforms may either be mounted on trucks to be transported thereon or be deposited e.g. on the ground while supported on their associated support legs, for instance for loading or unloading operations at storage depots, goods terminals and the like. Multipurpose loading platforms allow the transport and load-handling operations to be carried out in a rationalized and economical manner. Loading and unloading operations may be carried out at a goods terminal without the truck and its driver having to be tied up at the terminal during the operations, since the load-handling may be effected while the multipurpose loading platform is deposited, i.e. is supported on its support legs. Multipurpose loading platforms may be manufactured in a large variety of sizes and dimensions and thus be adjusted to the needs and wishes of the customer. One example of a typical multipurpose loading platform in accordance with the prior art is described in SE—A—356 720 (corresponding to FR—A—2.123.407).

Multipurpose loading platforms are constructed to allow them to be mounted on a truck by backing the truck chassis in underneath the deposited loading platform, i.e. while the latter is resting on its support legs. The loading platform is secured to the truck chassis and the loading platform support legs are moved telescopically into their transport position in which the legs are directed downwards. In accordance with the above-mentioned SE PS 356 720 the support legs are mounted on corner boxes which are arranged to be pushed inwards and outwards in such a manner that in their transport position the support legs will be positioned internally of the loading frame of the platform and in the deposited position of the platform the legs will be positioned externally of the loading frame. This widens the space between the support legs, which in turn makes it easier to back the truck chassis in underneath the loading platform.

One purpose of the subject invention is to provide an arrangement by means of which it becomes possible to obtain a higher level of deposition of the loading frame as well as a larger distance between the mounting points of the support legs and the load-receiving level of the platform without the support legs being positioned at a lower level during transport. These purposes are achieved in accordance with the teachings of the subject invention by means of a support leg which is characterized therein that it is articulated to a link arm for pivotal movements, said link arm being pivotally mounted on a corner box which is arranged for movement on the loading frame, that the point of articulation of the support leg to the link arm is spaced a predetermined distance from the pivot point of the link arm in the corner box, that the link arm is arranged to assume a first position, when the support leg is folded downwards and a to assume a second position when the support leg is folded upwards, and that in said first position of the link arm the pivot point of said support leg to the link arm is at a higher level than in the second position of the link arm.

Further characteristics of the invention and the advantages gained thereby will become apparent upon reading of the following description and the appended dependent claims.

The invention will be described in closer detail in the following with reference to the accompanying drawings, wherein

Fig. 1 is a perspective view of a corner of a deposited load platform equipped with a support leg in accordance with the invention,

Figs. 2 and 3 are two different lateral views of a support leg in accordance with the invention in the downwards folded position of the leg, i.e. the position of deposition of the loading frame/multipurpose platform.

Fig. 4 is a lateral view of the support leg in accordance with the invention in the upwards folded position of the leg, the transport position, in which the leg is secured by hooks.

Fig. 5 is a view as seen in the longitudinal direction of the loading frame with the support leg folded upwards and inserted underneath the loading frame, certain parts having been cut away for more clarity.

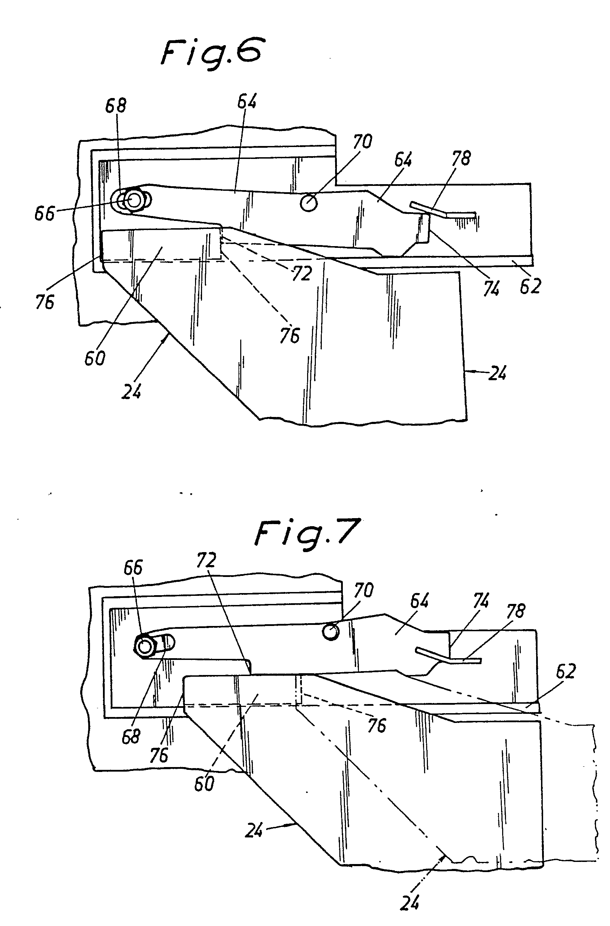

Figs. 6 and 7 are views as seen from the left in Figs. 2 and 4 and show a mechanism designed to latch the support leg respectively in the position when the latter is folded upwards and inserted underneath the loading frame and in the position when the leg is moved outwards beyond the loading frame.

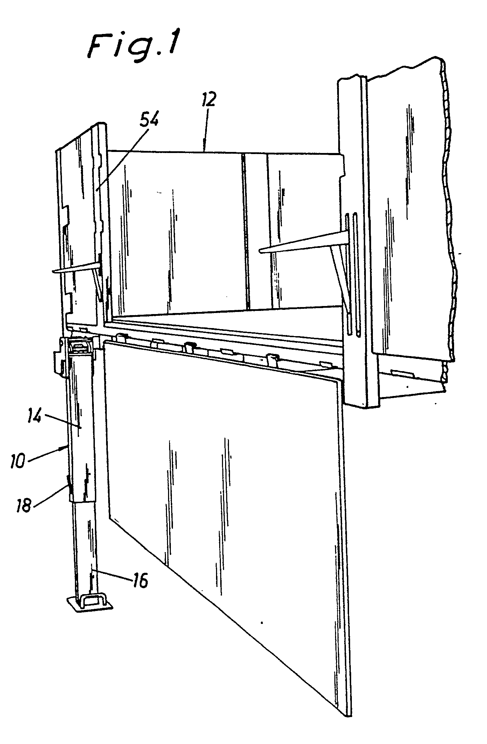

One support leg in accordance with the invention, generally designated by numeral 10, is arranged at each one of the four corners of a loading frame. As illustrated in Fig. 1 the loading frame could be a multipurpose loading platform 12. In Fig. 1 the multipurpose loading platform 12 is illustrated when deposited on its four support legs 10 which have been moved outwards to the position externally of the loading frame.

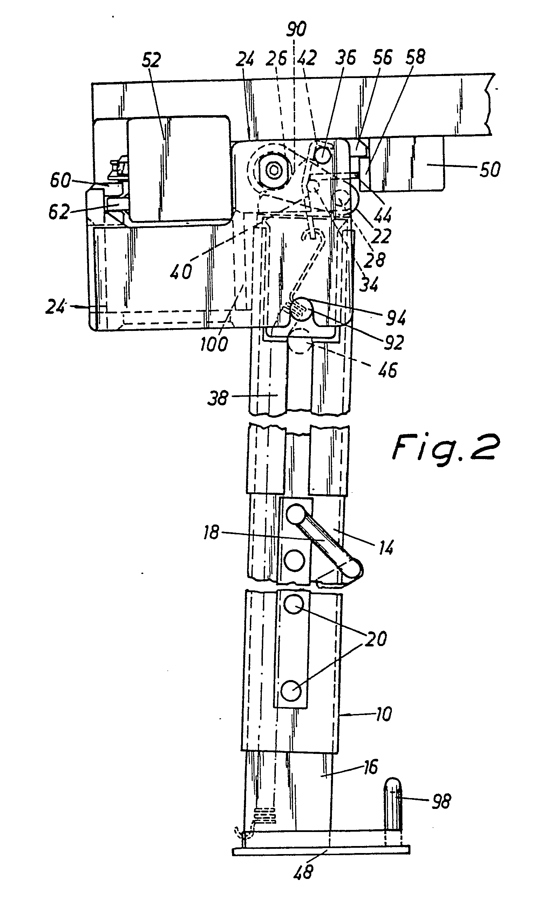

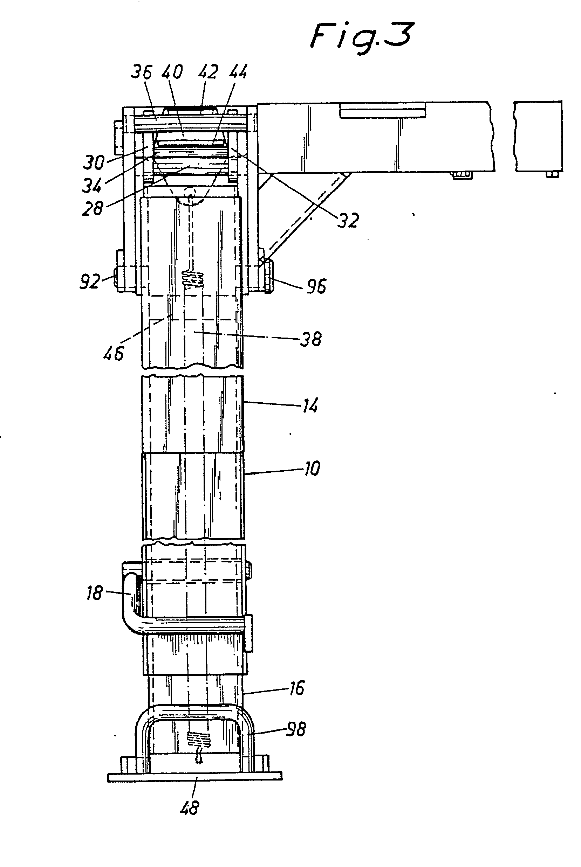

The support leg 10 comprises a number of sections which may be shortened or extended. In accordance with the shown embodiment two such sections 14, 16 are provided. The latter are shown in their extended position in Fig. 1, in which position the multipurpose platform is deposited on the ground and in Figs. 2 and 3 they are shown in the contracted position, i.e. the position in which they are prepared to be folded upwards to the horizontal transport position. A latch 18 is arranged to be inserted into an aperture 20 in the leg sections 14, 16 to lock the latter relative to reach other. A number of apertures 20 are formed in the leg sections 14, 16 to allow the sections to be moved into various desired relative positions.

At its upper part the support leg 10 is pivotally mounted in a corner box 24 with the aid of a link arm 22. The link arm 22 is pivotally mounted on a shaft 26 in the corner box 24 and the support leg 10 is pivotally mounted to the link arm 22 by means of a shaft 28 which extends between two plates 30, 32 of equal configuration, forming said link arm 22. The link arm plates are spaced some distance apart (see Fig. 3), a shaft 34 extending between them. A further shaft 36 is provided in the corner box 24.

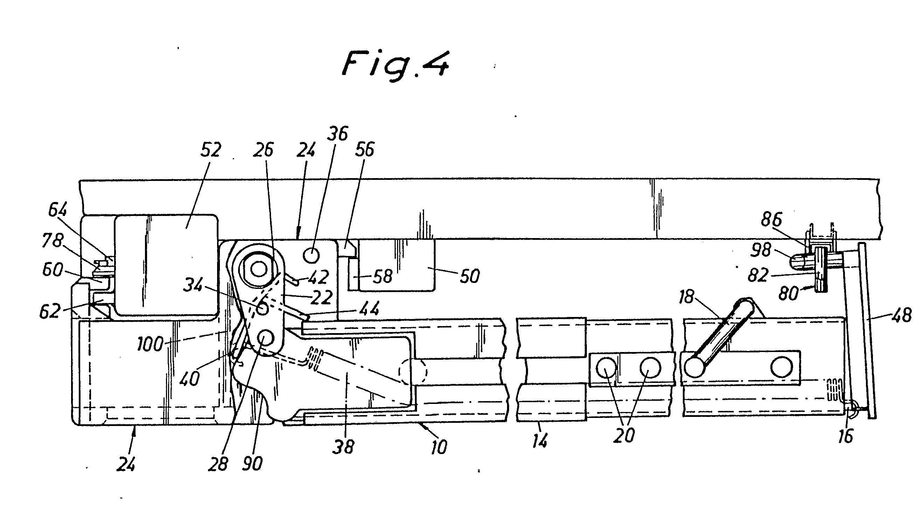

A spring 38 extends in the lengthwise direction of the support leg 10 through the interior thereof and one of the spring ends is attached to the extensible section 16 of the leg while the opposite spring end is secured to a mounting and hook-on member 40 of a special design. The member 40 is provided at the link arm 22 and is in the form of a plate the cross-sectional configuration of which appears from Figs. 2 and 4. At its upper edge this member is bent into a hook 42. The hook-on member 40 also has a plate 44 welded thereto, said plate 44 projecting essentially at right angles outwards from the hook-on member 40. The spring 38 is engaged in the hook-on member 40 and extends from the latter about a shaft 46 and further through the support leg 10 to be finally secured adjacent the bottom plate 48 of the extensible leg section 16.

The corner boxes 24 in which the support legs 10 are pivotally mounted, are provided one at each corner of the load-receiving frame. The support leg 10 shown in Fig. 1 may be either the front left support leg or the rear right support leg. The corner boxes 24 are positioned adjacent a pair of transverse beams, viz. (in the case the support leg illustrated is the rear right support leg) a front beam 50 and a rear transverse beam 52. The front beam 50 serves as the means of attachment in which a flap post 54 (see Fig. 1) is mounted. The corner box 24 projects upwards intermediate the two beams 50, 52 (see Fig. 2) and is provided with a projecting shoulder 56 arranged to run on a guide member 58 which is secured to the beam 50. The corner box 24 extends further about the beam 52 and is formed with a further shoulder 60 engaging over a guide 62 which is welded to the beam 52. In this manner the corner box 24 is movably mounted in the beams 50, 52 so as to allow the support leg 10 to be pulled outwards or pushed inwards relative to the loading frame.

A latch member 64 is provided to lock the corner box 24 in its respective inner and outer positions. The latch member 64 is pivotally mounted on a pivot pin 66 which extends through an elongate channel 68 in the latch member 64. Owing to the configuration of the channel 68 the latch member 64 may be moved sideways. The latch member 64 is operated by means of a handle 70 and has an inner blocking shoulder face 72 and an outer blocking edge face 74. These faces 72, 74 are designed to abut against edges 76 formed on the shoulder 60 to lock the corner box 24 in position. To operate the corner box 24 with the support leg 10 thereon the latch member 64 may be moved aside to rest on a holder member 78, allowing the corner box 24 with the shoulder 60 thereon to be moved past the latch member 64 and thus the support leg 10 to be moved to its outer position in which it extends beyond the loading frame.

When in its upper folded position the support leg 10 is suspended from a support 80 which comprises a hook member 82 which is secured to a beam 84 extending on the lower face of the loading platform so as to be allowed to move transversely relatively the platform. The beam 84 is mounted in a pair of brackets 86 in the form of U-iron members. The beam 84 is biased by means of a spring 88 the force of which tends to move the support 80 to a position underneath and internally of the loading frame.

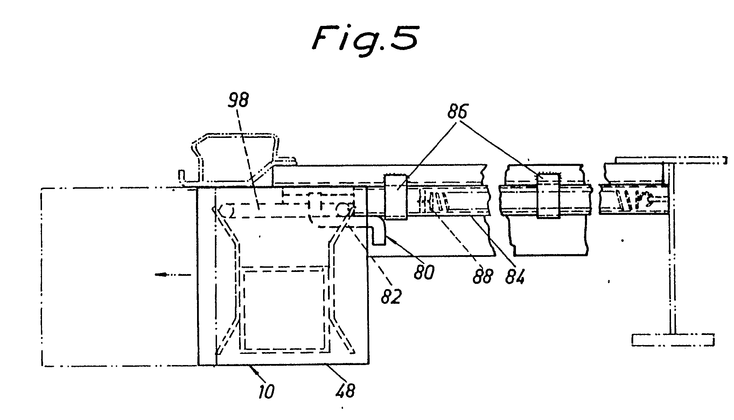

Figs. 4 and 5 show the support leg in the upper folded position of the latter. The hook-on member 40 to which the spring 38 is secured, abuts by means of its plate 44 against the shaft 34. The tension of the spring 38 tends to pivot the hook-on member 40 about the shaft 34 into abutment against the shaft 26, into the position illustrated in Fig. 4.

Folding the support leg 10 downwards is carried out in the following manner. The support leg 10 is first pulled from its inner position to the outer position (indicated in dash-and-dot lines in Fig. 5). The support leg 10 is then lifted off the support 80 which is moved aside by the spring 88. The support 10 is now pivoted downwards to a vertical position, the movement of its upper edge being guided by the profile 90 formed at this edge. The spring 38 acts to lift the leg 10 and move it to the position illustrated in Fig. 2. In this position the force of the spring 38 lifts the hook 42 of the hook-on member 40 above the shaft 36, whereby the hook will engage the shaft 36. The profile 90 will abut against the shaft 26 and the essential flow of forces between the support leg 10 and the loading frame when the loading platform is in its deposited position will be transferred via the abutment. When the leg 10 is lifted a pin 92 engages in a groove 94 formed in the corner box 24, thus imparting lateral stability to the support leg 10. A corresponding pin 96 is also provided on the inner face of the support leg for engagement in a groove (not shown) on the inner face of the corner box. The pins 92, 94 are urged into the grooves by the force of the spring 38.

The support leg 10, when folded downwards, is extended telescopically and the leg sections 14, 16 are blocked in position relatively to each other by insertion of the latch member 18 in a suitable one of the apertures 20. The support leg 10 extends at a slight angle outwards (in the forwards or rearwards direction, respectively) when the loading frame is deposited in order to impart more stability to the loading platform.

Folding the support leg 10 upwards is effected in the following manner. The latch member 18 is removed from its blocking position and the two leg sections 14, 16 are moved into their nesting position, which is simple owing to the spring 38 which acts to lift section 16. The sections 14, 16 are again blocked in their nesting position by means of the latch member 18 (this being the position shown in Figs. 2 and 3). The hook member 42 is lifted off the shaft 36 and the support leg 10 is carried downwards, allowing the pin 92 to disengage the groove 94 (and correspondingly allowing the pin 96 to go clear). The leg 10 is pivoted by the operator gripping the handle 98 formed at the bottom plate 48 and lifting/pivoting the leg 10 to the position illustrated in Fig. 4. In this position the handle 98 is inserted into the hook member 82. Finally, the leg is moved in underneath the loading frame by pushing the corner box 24 inwards. All these operational movements can be carried out by one single person, e.g. the driver without any difficulty.

The profile 90 controls and guides the movement of the support leg 10, when the latter is folded downwards, by the profile sliding along an inner wall 100 formed inside the corner box 24, until the leg 10 reaches its end position, wherein the profile 90 abuts against the shaft 26 (see Fig. 2). This guided movement of the leg 10 will additionally result in guidance of the movement of the link arm 22 so as to impart the desired movement thereto.

The mounting shaft 28 articulating the link arm 22 to the support leg 10 is at its lowest possible level (Fig. 4) in the upwards-folded position of the support leg 10 (i.e. the link arm assumes an essentially vertical position) which allows the upwards folded leg 10 to extend in underneath the beam 50. In the downwards folded position of the support leg (Fig. 2) the shaft 28 is at a considerably higher level. However, this level is below the level of the platform and it is therefore possible to equip the platform with a continuous flooring. Transport of the loading frame with the support legs 10, when folded downwards, becomes possible, since the support legs are suspended by the spring 38 and the hook-on member 40. As a result of the lower-positioned mounting shaft of the support legs 10 compared with conventionally mounted loading frames, the loading frame, when deposited on ground, will be at a higher level. The construction in accordance with the invention allows the support leg 10 to be positioned intermediate the flap post 54 and the cross beam 52 without in any way incombering or interfering with the leg function.

## Claims

1. An arrangement of foldable and lengthwise adjustable support legs in a load-carrying frame, such as a load-receiving platform, said support legs (10) each comprising at least two telescopically displaceable leg sections (14, 16), characterized therein that for pivotal movements the support leg (10) is articulated to a link arm (22), said link arm being pivotally mounted on a corner box (24) which is arranged for movement on said loading frame, that the point of articulation of the support leg (10) to the link arm (22) is spaced a predetermined distance from the pivot point (26) of said link arm (22) to the corner box (24), that the link arm (22) is arranged to assume a first position, when said support leg (10) is folded downwards and to assume a second position, when the support leg (10) is folded upwards, and in that in said first position of the link arm (22) the pivot point (28) of said support leg (10) to the link arm (22) is at a higher level than in the second position of the link arm (22).

2. An arrangement as claimed in claim 1, characterized therein that the corner box (24) is movably mounted on said loading frame in order to allow movement of the support leg (10) between a retracted position when the leg is positioned internally of the loading frame and an outer position when the leg is positioned externally of the loading frame.

3. An arrangement as claimed in claim 1 or 2, characterized therein that the support leg (10) is equipped with a spring means (38) which is arranged to bias the two telescopically displaceable sections (14, 16) forming said support leg (10) in such a manner that said two leg sections tend to move to the position wherein they are nested in each other.

4. An arrangement as claimed in claim 3, characterized therein that the spring means (38) is mounted in one (16) of the telscopically displaceable leg sections, a mounting member (42) being arranged to be actuated by means of the link arm (22) in order to bias said spring means (38) in the downwards folded position of the support leg (10) and in its upwards folded position of said support leg (10).

5. An arrangement as claimed in claim 4, characterized therein that said mounting member (42), when the support leg (10) is folded downwards, is arranged to abut against a shaft in said corner box (24) and, when the support leg (10) is folded upwards, to abut against a shaft (26) provided on the link arm (22).

6. An arrangement as claimed in any one of claims 2—5, characterized therein that a locking means is arranged to block the corner box (24) both in the retracted position of the support leg (10) underneath the loading frame and in the extended position of the support leg externally of the loading frame and in that said locking means is a pivotally mounted latch member (64).

7. An arrangement as claimed in any one of the preceding claims, characterized by a support (80), said support leg (10) arranged to be suspended from said support when in its upwards folded position.

8. An arrangement as claimed in claim 7, characterized therein that the support (80) is a spring-loaded hook member (80) which is attached to a beam (84) which is movably mounted in a pair of brackets (86).

**Patentansprüche**

1. Einrichtung mit klappbaren und in Längsrichtung verstellbaren Stützfüssen in einem lasttragenden Rahmen wie einer Ladepritsche, wobei jeder Stützfuss (10) mindestens zwei teleskopisch verstellbare Fussabschnitte (14, 16) umfasst, dadurch gekennzeichnet, dass der Stützfuss (10) zur Aufführung von Schwenkbewegungen an einem Verbindungsarm (22) angelenkt ist, wobei dieser Verbindungsarm an einem am lasttragenden Rahmen bewegbar angeordneten Eckkasten (24) schwenkbar angeordnet ist, die Gelenkstelle des Stützfusses (10) am Verbindungsarm (22) um einen vorbestimmten Abstand von der Gelenkstelle (26) des Verbindungsarmes (22) am Eckkasten (24) beabstandet ist, der Verbindungsarm (22) so angeordnet ist, dass er sich in einer ersten Lage befindet, wenn der Stützfuss (10) nach unten geschwenkt ist, und er sich in einer zweiten Lage befindet, wenn der Stützfuss (10) nach oben geschwenkt ist, und die Gelenkstelle (28) des Stützfusses (10) am Verbindungsarm (22) sich in der ersten Lage des Verbindungsarmes (22) an höherer Stelle befindet als in der zweiten Lage des Verbindungsarmes (22).

2. Einrichtung nach Anspruch 1, dadurch gekennzeichnet, dass der Eckkasten (24) am lasttragenden Rahmen beweglich angeordnet ist, um eine Bewegung des Stützfusses (10) zwischen einer eingefahrenen Lage, bei welcher sich der Stützfuss innerhalb des lasttragenden Rahmens befindet, und einer ausgefahrenen Lage, bei welcher sich der Stützfuss ausserhalb des laststragenden Rahmens befindet, zu ermöglichen.

3. Einrichtung nach Anspruch 1 oder 2, dadurch gekennzeichnet, dass der Stützfuss (10) mit einem Federmittel (38) versehen ist, welches die beiden diesen Stützfuss (10) bildenden, teleskopisch verstellbaren Abschnitte (14, 16) auf solche Weise beaufschlagt, dass diese beiden Fussabschnitte dazu tendieren, sich zur lage hin zu bewegen, in der die ineinander verschachtelt sind.

4. Einrichtung nach Anspruch 3, dadurch gekennzeichnet, dass das Federmittel (38) in einem (16) der teleskopisch verstellbaren Abschnitte angeordnet ist, wobe ein Halterungselement (42) so angeordnet ist, dass es vom Verbindungsarm (22) betätigt wird, um das Federmittel (38) in der nach unten geschwenkten Lage des Stützfusses (10) und auch in der nach oben geschwenkten Lage des Stützfusses (10) zu beaufschlagen.

5. Einrichtung nach Anspruch 4, dadurch gekennzeichnet, dass das Halterungselement (42) so angeordnet ist, dass es im Eckkasten (24) an einer Achse im anschlag ist, wenn der Stützfuss (10) nach unten geschwenkt ist, und an einer am Verbindungsarm (22) vorgesehenen Achse (26) im Anschlag ist, wenn der Stützfuss (10) nach oben geschwenkt ist.

6. Einrichtung nach einem der Ansprüche 2 bis 5, dadurch gekennzeichnet, dass ein Verriegelungsmittel vorgesehen ist, um den Eckkasten (24) sowohl in der eingefahrenen Lage des Stützfusses (10) unterhalb des lasttragenden Rahmens als auch in der ausgefahrenen Lage des Stützfusses ausserhalb des lasttragenden Rahmens zu blockieren, und dieses Verriegelungsmittel ein gelenkig angeordnetes Riegelelement (64) ist.

7. Einrichtung nach einem der Ansprüche 1 bis 6, gekennzeichnet durch einen Träger (80), wobei der Stützfuss (10) so angeordnet ist, dass er an diesem Träger hängt, wenn er sich in seiner nach oben geschwenkten Lage befindet.

8. Einrichtung nach Anspruch 7, dadurch gekennzeichnet, dass der Träger (80) ein federbeaufschlagtes Hakenelement (80) ist, das an einem Balken (84) befestigt ist, welcher in einem Paar von Bügeln (86) bewegbar angeordnet ist.

**Revendications**

1. Dispositif de pattes de support repliables et réglables dans le sens de la longueur dans un châssis porte-charges tel qu'un plateau porte-charges, chaque patte de support (10) comportant au moins deux sections de patte (14, 16) télescopiquement déplaçables, caractérisé en ce qu'afin de permettre ses mouvements de pivotement la patte de support (10) est articulée à un bras de liaison (22), ce bras de liaison étant monté à pivotement dans un boîtier d'angle (24) qui est disposé de façon mobile sur le châssis porte-charges, le point d'articulation de la patte de support (10) au bras de liaison (22) étant distant du point (26) de fixation à pivotement du bras de liaison (22) au boîtier d'angle (24) d'une distance prédéterminée, le bras de liaison (22) est disposé de façon à prendre une première position quand la patte de support (10) est repliée vers le bas et à prendre une deuxième position quand la patte de support (10) est repliée vers le haut, et dans la première position du bras de liaison (22) le point (28) de fixation à pivotement de la patte de support (10) au bras de liaison (22) se trouve à une niveau plus élevé que dans la deuxième position du bras de liaison (22).

2. Dispositif selon la revendication 1, caractérisé en ce que le boîtier d'angle (24) est monté de façon mobile sur le châssis porte-charges afin de permettre un mouvement de la patte de support (10) entre une position rétractée obtenue lorsque la patte est positionnée à l'intérieur du châssis porte-charges, et une position sortie obtenue lorsque la patte est positionnée à l'extérieure du châssis porte-charges.

3. Dispositif selon la revendication 1 ou 2, caractérisé en ce que la patte de support (10) est pourvue d'un moyen de ressort (38) disposé de façon à solliciter les deux sections de patte (14, 16) télescopiquement déplaçables qui forment la patte de support (10) de façon telle que les deux sections de patte tendent à se déplacer vers la position dans laquelle elles sont logées l'une dan l'autre.

4. Dispositif selon la revendication 3, caractérisé en ce que le moyen de ressort (38) est monté sur l'une (16) des sections de patte télescopiquement déplaçables, un élément de montage (42) étant disposé de façon à être actionné par le bras de liaison (22) afin de solliciter le moyen de ressort (38) dans la position repliée vers le bas de la patte de support (10) et aussi dans la position repliée vers le haut de la patte de support (10).

5. Dispositif selon la revendication 4, caractérisé en ce que l'élément de montage (42) est disposé de façon à buter contre un axe dans le boîtier d'angle (24) lorsque la patte de support (10) est repliée vers le bas et contre un axe (26) prévu sur la bras de liaison (22) lorsque la patte de supporte (10) est repliée vers le haut.

6. Dispositif selon l'une des revendications 2 à 5, caractérisé en ce qu'un moyen de verrouillage est disposé de façon à bloquer le boîtier d'angle (24) aussi bien dans la position rétractée de la patte de support (10) au-dessous du châssis porte-charges que dans la position étendue de la patte de support à l'extérieur du châssis porte-charges, et le moyen de verrouillage est un élément de verrou (64) monté à pivotement.

7. Dispositif selon l'une des revendications 1 à 6, caractérisé par un support (80), la patte de support (10) étant disposée de façon à être suspendue à ce support lorsqu'elle est dans sa position rétractée vers la haut.

8. Dispositif selon la revendication 7, caractérisé en ce que le support (80) est un élément de crochet sollicité par ressort, fixé à une poutre (84) qui est montée de façon mobile dans une paire d'arceaux (86).

# Fig.1

Fig.2

# Fig.3

# Fig.4

0 163 621

Fig.5

### Fig.6

### Fig.7